# EUROPÄISCHE PATENTSCHRIFT

(11) **EP 3 572 675 B1**
(45) Veröffentlichungstag und Bekanntmachung des Hinweises auf die Patenterteilung: **20.01.2021**
(21) Anmeldenummer: 19172712.2
(22) Anmeldetag: 06.05.2019
(51) Int. Cl.: F15B 1/26, F15B 21/047, B64D 41/00

(54) **RESERVOIR FÜR EIN HYDRAULIKSYSTEM**
RESERVOIR FOR A HYDRAULIC SYSTEM
RÉSERVOIR POUR UN SYSTÈME HYDRAULIQUE

(30) Priorität: 24.05.2018 DE 102018112523
(43) Veröffentlichungstag der Anmeldung: 27.11.2019
(73) Patentinhaber: Airbus Operations GmbH, 21129 Hamburg (DE)
(72) Erfinder: MacLennan, Simon, 21129 Hamburg (DE); Behr, Robert, 21129 Hamburg (DE)

(56) Entgegenhaltungen:
- DE-U1-202005 017 434
- FR-A- 1 102 637
- "Accessories aren't just bells and whistles", MOTION SYSTEM - HYDRAULICS & PNEUMATICS, PENTON MEDIA, CLEVELAND, OH, US, Bd. 60, Nr. 12, 1. Dezember 2007 (2007-12-01), Seiten 41-45, XP001510568, ISSN: 1543-6470

## Beschreibung

### TECHNISCHES GEBIET

Die Erfindung betrifft ein Reservoir für ein Hydrauliksystem, ein Hydrauliksystem, das mindestens ein derartiges Hydraulikreservoir aufweist, sowie ein Fahrzeug mit einem solchen Hydrauliksystem.

### HINTERGRUND DER ERFINDUNG

Hydrauliksysteme können üblicherweise ein vorbestimmtes Volumen einer Hydraulikflüssigkeit aufweisen und diese mit einem vorgegebenen Druck bereitstellen. Es werden dabei Reservoire bereitgestellt, die eine in vorgegebenen Grenzen variable Menge der Hydraulikflüssigkeit speichern können. Ein variabler Füllgrad des Reservoirs ist sinnvoll, da die Menge der in Verbrauchern befindlichen Hydraulikflüssigkeit beim Betrieb ebenso variabel sein kann.

Insbesondere in Flugzeugen haben sich sogenannte Bootstrap-Reservoire durchgesetzt, welche zusätzlich zu der Funktion des Speicherns der Hydraulikflüssigkeit einen leichten Überdruck an einer Saugseite bereitstellen können, der deutlich unterhalb des Druckniveaus des Hydrauliksystems liegt. Hierdurch kann Kavitation an einer Hydraulikpumpe verhindert werden.

Ein gängiges Bootstrap-Reservoir weist zwei Kolben auf, die mechanisch miteinander verbunden sind und unterschiedliche Flächenmaße aufweisen. Ein kleinerer Kolben wird mit einem von dem Hydrauliksystem bereitgestellten Druck beaufschlagt, so dass er mit einer von dem Druck und der Fläche des kleineren Kolbens abhängigen Kraft auf den anderen, größeren Kolben einwirkt. Der größere Kolben steht indes mit einer Niederdruckseite in Verbindung und wirkt auf die Hydraulikflüssigkeit ein, die zu der Saugseite der Pumpe gerichtet ist. Dadurch wird ein gewisser Druck in der Niederdruckseite erzeugt. Je nach Verhältnis der Flächen der beiden Kolben kann der Druck der Hydraulikflüssigkeit an der Niederdruckseite und damit an der Saugseite der Pumpe bestimmt werden.

Ein solcher Aufbau ist sehr effizient und wirksam, allerdings ist hierfür eine gewisse Baulänge erforderlich.

DE 20 2005 017434 U1 offenbart einen Antikavitations-Fluidspeicher für Hydraulikkreisläufe mit einem Gehäuse, das einen Speicherraum umschließt, sowie einem bewegbaren Absperrelement, das im Speicherraum angeordnet ist und eine Fluidkammer mit variablem Volumen fluiddicht begrenzt, wobei eine erste Seite des Absperrelements mit Atmosphärendruck und eine zweite Seite des Absperrelements mit dem Betriebsdruck des Hydraulikkreislaufs beaufschlagt ist.

### ZUSAMMENFASSUNG DER ERFINDUNG

Es könnte sich anbieten, ein Reservoir zu verwenden, welches zwar dieselben Funktionen bereitstellen kann wie ein Bootstrap-Reservoir, jedoch kompakter aufgebaut ist und insbesondere eine geringere Baulänge aufweist. Eine derartige Ausgestaltung ist aus dem Stand der Technik nicht bekannt.

Es ist folglich eine Aufgabe der Erfindung, ein alternatives Hydraulik-Reservoir bereitzustellen, das deutlich geringere Abmessungen und insbesondere eine geringere Baulänge aufweist.

Die Aufgabe wird mit den Merkmalen des unabhängigen Anspruchs 1 gelöst. Vorteilhafte Ausführungsformen und Weiterbildungen sind den Unteransprüchen und der nachfolgenden Beschreibung zu entnehmen.

Es wird ein Reservoir für ein Hydrauliksystem vorgeschlagen, aufweisend ein Gehäuse mit einem Innenraum und einem Fluidausgang, eine hydraulische Antriebsvorrichtung, die mit einer in dem Gehäuse verlaufenden Welle zum Einleiten eines Drehmoments gekoppelt ist, und eine in dem Gehäuse angeordnete Trennvorrichtung zum Unterteilen des Innenraums in zwei voneinander getrennte Abschnitte, wobei der Fluidausgang mit einem ersten Abschnitt in Fluidverbindung steht, wobei sich die Trennvorrichtung entlang der Welle in dem Gehäuse erstreckt, wobei die Trennvorrichtung dazu eingerichtet ist, das Größenverhältnis der beiden getrennten Abschnitte durch Verschwenken mindestens einer mit der Welle gekoppelten ersten Fläche der Trennvorrichtung um eine durch die Welle vorgegebene Achse einzustellen, und wobei die Trennvorrichtung mit der hydraulischen Antriebsvorrichtung derart gekoppelt ist, dass die mindestens eine erste Fläche ein von einem Flächenmaß der ersten Fläche und dem Drehmoment abhängigen Druck auf ein in dem ersten Abschnitt befindliches Fluid ausübt.

Der grundlegende Aufbau des erfindungsgemäßen Reservoirs weicht demgemäß deutlich von einem herkömmlichen Bootstrap-Aufbau ab. Ein Kernaspekt liegt in der Kombination der hydraulischen Antriebsvorrichtung und der mit der Welle gekoppelten ersten Fläche der vorangehend genannten Trennvorrichtung. Wie nachfolgend ausführlich erläutert, können hierdurch dieselben Vorteile erreicht werden wie mit einem Bootstrap-Reservoir, allerdings deutlich kompakteren Abmessungen.

Das Gehäuse dient der Aufnahme des Fluids, insbesondere einer Hydraulikflüssigkeit. Bevorzugt, jedoch nicht notwendigerweise, kann der in dem Gehäuse definierte Innenraum zylindrisch sein. Das Gehäuse kann insbesondere eine Längsachse oder Mittelachse aufweisen, die eine Erstreckungsrichtung des Gehäuses vorgibt.

Der Innenraum des Gehäuses wird durch die Trennvorrichtung in zwei voneinander getrennte Abschnitte unterteilt. Ein Abschnitt ist hierbei als ein Teil des Innenraums zu verstehen, der von einem anderen Teil oder Abschnitt des Innenraums separat ist. Es könnte sich etwa die erste Fläche radial von der Welle nach außen erstrecken und einen Zwischenraum zwischen der Welle und einer Innenwandung des Gehäuses vollständig überbrücken. Auf einer anderen Seite der Welle könnte eine feststehende zweite Fläche angeordnet sein, die die Abtrennung des Innenraums durch eine radiale Erstreckung vervollständigt. Abhängig von dem Schwenkwinkel der ersten Fläche um die Welle bzw. die Längsachse oder die Mittelachse, werden die Größen der beiden voneinander getrennten Abschnitte bestimmt.

Einer der Abschnitte steht mit dem Fluidausgang in Fluidverbindung. Der Fluidausgang ist dazu vorgesehen, eine Hydraulikpumpe mit Fluid zu versorgen. Wird Fluid aus dem ersten Abschnitt entnommen, kann die erste Fläche aufgrund eines über die Welle anliegenden Drehmoments weiter um die Längsachse bzw. Mittelachse schwenken. Durch das Verschwenken kann das Volumen des ersten Abschnitts sukzessive verringert werden, so dass der Volumenverlust des Fluids ausgeglichen wird und dennoch eine Kraft bzw. ein Druck auf das verbleibende Fluid wirkt. An dem Fluidausgang ist folglich stets ein Fluid mit einem bestimmten Druck vorhanden, das einer Pumpe zugeführt werden kann.

Wird indes Fluid durch einen hier nicht näher genannten Fluideingang wieder in den ersten Abschnitt eingeleitet, kann die erste Fläche in die andere Richtung verschwenkt werden, so dass sich das Volumen des ersten Abschnitts wieder vergrößert. Der momentane Winkel der ersten Fläche stellt sich durch das Kräftegleichgewicht zwischen der durch das Fluid auf die erste Fläche wirkenden Kraft und das Drehmoment an der Welle ein.

Die hydraulische Antriebsvorrichtung ist dazu eingerichtet, ein bestimmtes Drehmoment in die Welle einzuleiten, so dass der gewünschte Druck an dem Fluidausgang anliegt. Es können unterschiedliche Varianten genutzt werden, die aus einem Hydraulikdruck, beispielsweise von einer Hochdruckseite eines Hydrauliksystems, ein Drehmoment erzeugen können. Aufgrund des begrenzten Schwenkwinkels der ersten Fläche könnte es sich etwa anbieten, einen Kolben mit einem begrenzten Stellweg vorzusehen, der über eine Hebelkonstruktion oder dergleichen zu einer Erzeugung von Drehmoment genutzt wird. Der Stellweg des Kolbens müsste bei dieser Variante jedoch nicht entlang der Mittelachse bzw. Längsachse, das heißt der Wellenerstreckung, verlaufen, sondern quer hierzu. Eine Folge hiervon ist eine deutliche Reduktion der erforderlichen Baulänge des erfindungsgemäßen Reservoirs gegenüber einem herkömmlichen Bootstrap-Reservoir. Zudem kann aufgrund der Verwendung eines um eine Welle herum schwenkbaren Flächenelements ein flacher, kompakterer Aufbau erreicht werden.

Insgesamt wird durch das erfindungsgemäße Reservoir eine verbesserte Kompaktheit und eine deutlich geringere Baulänge erreicht, bei gleichbleibender Funktion und ebenso gleichbleibend guter Anpassbarkeit an einen gewünschten Druck.

In einer vorteilhaften Ausführungsform ist der Innenraum zylindrisch. Hierdurch ergibt sich eine besonders einfache Konstruktion des Gehäuses. Die Welle kann sich entlang einer Mittelachse des Innenraums erstrecken. Die erste Fläche kann in diesem Fall im Wesentlichen als Rechteck ausgeführt sein und eine Hälfte des zylindrischen Innenraums vollständig abdecken. Die erste Fläche erstreckt sich etwa von einer Bodenfläche des Innenraums zu einer gegenüberliegend angeordneten Deckfläche, sowie zwischen der Welle und einer radial außen liegenden Innenwandung.

Es ist folglich bevorzugt, wenn sich die erste Fläche von der Welle radial nach außen zu einer Innenwandung des Innenraums erstreckt. Um eine vollständige Abdichtung zwischen der Welle und der Innenwandung zu erreichen, kann eine erste Gleitdichtung an der ersten Fläche angeordnet werden. Diese könnte sich an der Innenwandung abstützen und derart ausgebildet sein, dass ein Durchtritt von Fluid aus dem ersten Abschnitt in den zweiten Abschnitt an der ersten Fläche vorbei unterbunden wird.

In einer ebenso bevorzugten Ausführungsform weist die Trennvorrichtung ferner eine zweite Fläche auf, die starr in dem Innenraum angeordnet ist und sich von einer Innenwandung des Innenraums radial zu der Welle hin erstreckt. Auch hier bietet es sich an, eine zweite Gleitdichtung an der zweiten Fläche anzuordnen, die sich auf der Welle abstützt. Dadurch soll ein Durchtritt von Fluid von dem ersten Abschnitt in den zweiten Abschnitt um die zweite Fläche herum unterbunden werden. Mit der Anordnung aus der ersten Fläche und der zweiten Fläche ergibt sich folglich die Möglichkeit, den ersten Abschnitt und den zweiten Abschnitt jeweils als einen Zylinderausschnitt zu realisieren. Dieser kann eine Art keilförmiges Volumen mit einem Kreisausschnitt als Grundfläche bereitstellen, wobei beide Abschnitte sich im Wesentlichen zu 360° ergänzen und alleine durch den Winkel zwischen der ersten Fläche und der zweiten Fläche die Aufteilung der beiden Abschnitte bestimmt wird.

In einer vorteilhaften Ausführungsform weist die hydraulische Antriebsvorrichtung einen Kolben auf, der in einem Zylinder verschiebbar gelagert ist, mechanisch mit einer Antriebswelle gekoppelt ist und über einen Hochdruckeingang in dem Zylinder mit einem Hydraulikdruck beaufschlagbar ist. Der Kolben kann folglich mit einem an dem Hochdruckeingang anliegenden Hydraulikdruck beaufschlagt werden, so dass eine Kraft auf den Kolben einwirkt, um diesen gegebenenfalls in dem Zylinder zu verschieben. Der Hochdruck kann aus einem Hydrauliksystem stammen, der das Reservoir beinhaltet. Durch eine mechanische Kopplung mit der Antriebswelle kann der Kolben durch die hervorgerufene Kraft ein Drehmoment in die Antriebswelle einleiten. Es ist verständlich, dass die Antriebswelle zum Einleiten eines Drehmoments an die Welle mit dieser gekoppelt ist. Dies könnte durch eine entsprechende Kupplung erfolgen. Die hydraulische Antriebsvorrichtung und das Gehäuse können bei dieser Variante getrennt voneinander jeweils als eigenständige Einheit vorgesehen werden.

In einer bevorzugten Ausführungsform ist der Kolben mit einer eine erste Verzahnung aufweisenden Stange verbunden, wobei die Antriebswelle mit einer zweiten Verzahnung ausgestattet ist und wobei die erste Verzahnung in die zweite Verzahnung eingreift. Eine auf den Kolben einwirkende Kraft kann folglich direkt an einem Umfang der Antriebswelle in diese eingeleitet werden. Der Hebelarm, über den die auf den Kolben wirkende Kraft auf die Antriebswelle einwirkt, wird durch den Wirkdurchmesser der zweiten Verzahnung bestimmt. Je nach Größe der Fläche des Kolbens und der Höhe des Drucks an dem Hochdruckeingang kann folglich das an der Antriebswelle liegende Drehmoment bestimmt werden. Wie vorangehend bereits erwähnt, kann dadurch der Druck in dem ersten Abschnitt bestimmt werden, indem das Flächenmaß der ersten Fläche berücksichtigt wird.

Das erfindungsgemäße Reservoir erlaubt daher an mehreren Stellen eine Beeinflussung des Drucks in dem ersten Abschnitt. Damit wird eine besonders gute Einstellbarkeit und Modularität des Reservoirs erlaubt. Das Reservoir kann durch Variation einer oder mehrerer Komponenten an verschiedene Druckniveaus eines Hydrauliksystems angepasst werden, ohne stets einen anderen Druck in dem ersten Abschnitt zu generieren. Durch eine Vergrößerung der Kolbenfläche kann der Druck in dem ersten Abschnitt erhöht werden. Eine Erhöhung dieses Drucks geht auch mit der Vergrößerung des Wirkdurchmessers der zweiten Verzahnung einher. Der Druck wird zudem mit Variation des Flächenmaßes und der radialen Erstreckung der ersten Fläche beeinflusst. Diese drei Komponenten können unabhängig voneinander ausgewählt und zusammengestellt werden. Es könnte sich anbieten, zur Erreichung einer besonderen Modularität unterschiedliche Gehäusegrößen mit unterschiedlichen Ausgestaltungen der ersten Fläche ebenso bereitzustellen wie unterschiedliche hydraulische Antriebsvorrichtungen mit unterschiedlichen Kolbengrößen.

Als Alternative zu einer Zahnstange könnte insbesondere aufgrund des begrenzten Schwenkweges auch eine Hebelmechanik aus miteinander verbundenen Hebeln realisiert werden, die mit den Kolben und der Antriebswelle verbunden sind. Damit könnten annähernd 180° an Schwenkbewegung der ersten Fläche realisiert werden.

In einer vorteilhaften Ausführungsform ist das Gehäuse mit einem Ausschnitt ausgestattet, der in Fluidverbindung mit dem zweiten Abschnitt steht. Hierdurch kann beim Bewegen der ersten Fläche ein variables Gasvolumen in dem zweiten Abschnitt kompensiert werden. Gas kann durch den Ausschnitt in den zweiten Abschnitt eintreten oder hierüber wieder austreten. Zum Verhindern von möglicher Verschmutzung kann der Ausschnitt mit einem Filter oder dergleichen ausgestattet sein. Das Gas kann insbesondere Luft sein.

In einer vorteilhaften Ausführungsform der Erfindung sind die hydraulische Antriebsvorrichtung und die erste Fläche derart ausgeführt, dass ein Druckverhältnis zwischen einem Druck an der hydraulischen Antriebsvorrichtung und dem Fluidausgang in einem Bereich von 1:25 bis 1:120 eingestellt wird.

Die Erfindung betrifft ferner ein Hydrauliksystem, aufweisend mindestens ein Hydraulikreservoir nach der vorangehenden Beschreibung.

In einer bevorzugten Ausführungsform weist das Hydrauliksystem eine Pumpe auf, die einen Eingang und einen Ausgang aufweist, wobei der Eingang mit dem Fluidausgang des Hydraulikreservoirs gekoppelt ist und wobei der Ausgang mit der hydraulischen Antriebsvorrichtung gekoppelt ist.

Die Erfindung betrifft ferner ein Fahrzeug mit einem Hydrauliksystem gemäß der vorhergehenden Beschreibung.

In einer Variante ist das Fahrzeug ein Flugzeug. Es könnte sich hierbei anbieten, die Höhe des Drucks in dem ersten Abschnitt von der Einbauposition des Hydraulikreservoirs in Relation zu der Einbauposition der Pumpe abhängig zu machen. Zudem ist eine Abstimmung der hydraulischen Antriebsvorrichtung sowie des Flächenmaßes der ersten Fläche von dem vorgesehenen Druck des Hydrauliksystems abhängig zu machen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Fig. 1: zeigt eine schematische Darstellung eines erfindungsgemäßen Reservoirs.
- Fig. 2: zeigt schematisch ein Hydrauliksystem mit einem solchen Reservoir.
- Fig. 3: zeigt ein Flugzeug, in das ein derartiges Hydrauliksystem integriert ist.

### DETAILLIERTE DARSTELLUNG EXEMPLARISCHER

### AUSFÜHRUNGSFORMEN

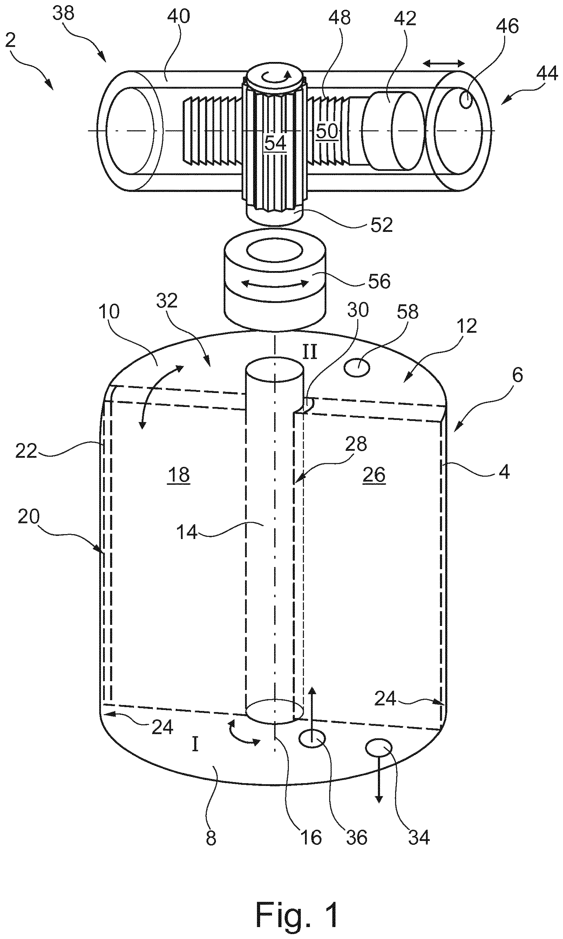

Fig. 1 zeigt eine schematische Darstellung eines erfindungsgemäßen Hydraulikreservoirs 2. Das Reservoir 2 weist ein Gehäuse 4 auf, das exemplarisch zylindrisch ausgeführt ist. Das Gehäuse 4 weist hierzu eine Mantelfläche 6 auf, die mit einem Boden 8 und einem Deckel 10 ergänzt ist. Das Gehäuse 4 bildet einen Innenraum 12 aus, durch den sich eine Welle 14 erstreckt. Diese ist entlang einer Mittelachse 16 angeordnet, erstreckt sich im Wesentlichen vollständig durch den gesamten Innenraum 12 und ragt aus dem Deckel 10 nach außen.

Die Welle 14 ist bevorzugt in dem Deckel 10 abgedichtet, beispielsweise mit einem Radialwellendichtring (nicht gezeigt) oder einer ähnlichen Einrichtung. Die Welle 14 ist drehbar in dem Gehäuse 4 gelagert und mit einer ersten Fläche 18 verbunden. Diese ist exemplarisch rechteckig ausgeführt und erstreckt sich in dem Innenraum 12 von dem Boden 8 zu dem Deckel 10. Durch die Anbindung an die Welle 14 folgt sie ihrer Bewegung. An einem radial außen liegenden Ende 20 der ersten Fläche 18 befindet sich eine erste Gleitdichtung 22, die die erste Fläche 18 zu einer Innenwandung 24 hin abdichtet.

An einer in dieser Darstellung gegenüberliegenden Seite der Welle 14 ist eine zweite Fläche 26 dargestellt, welche ebenso exemplarisch rechteckig ausgeführt ist. Die zweite Fläche 26 ist starr mit der Innenwandung 24 verbunden und erstreckt sich radial zu der Welle 14 hin. An einer zu der Welle 14 gewandten Kante 28 der zweiten Fläche 26 befindet sich eine zweite Gleitdichtung 30, die ähnlich wie die erste Gleitdichtung 22 aufgebaut sein kann und die Welle 14 gegenüber der zweiten Fläche 26 abdichtet. Die Welle 14, die erste Fläche 18 und die zweite Fläche 26 bilden eine Trennvorrichtung 32 aus, welche den Innenraum 12 in einen ersten Abschnitt I und einen zweiten Abschnitt II unterteilt.

Mit diesem Aufbau kann durch Rotation der Welle 14 folglich die erste Fläche 18 um die Mittelachse 16 herum verschwenkt werden, so dass der erste Abschnitt I vergrößert und der zweite Abschnitt II verkleinert werden oder umgekehrt.

In dem ersten Abschnitt I ist ein Fluidausgang 34 angeordnet, der mit dem ersten Abschnitt I in Fluidverbindung steht. Des Weiteren ist ein Fluideingang 36 vorgesehen, der ebenfalls in Fluidverbindung mit dem ersten Abschnitt I steht. Aus dem Fluidausgang 34 kann von einer Hydraulikpumpe oder dergleichen Fluid aus dem ersten Abschnitt I entnommen werden und aus dem Fluideingang 36 kann Fluid wieder in den ersten Abschnitt I eingeleitet werden.

Zusätzlich ist eine hydraulische Antriebsvorrichtung 38 vorgesehen und weist einen Zylinder 40 auf, in dem ein Kolben 42 verschiebbar gelagert ist. Der Zylinder 40 weist an einem ersten Ende 44 einen Hochdruckeingang 46 auf, der mit einer Hochdruckleitung eines Hydrauliksystems koppelbar ist. Hierdurch wird der Kolben 42 mit einem hohen Druck des Hydrauliksystems beaufschlagt und erfährt eine von dem ersten Ende 44 abgewandte Kraft.

An einer dem ersten Ende 44 abgewandten Seite des Kolbens 42 ist eine Stange 48 angeordnet, die mit einer ersten Verzahnung 50 versehen ist. Die hydraulische Antriebsvorrichtung 38 weist ferner eine Antriebswelle 52 auf, die mit einer zweiten Verzahnung 54 versehen ist. Die Antriebswelle 52 ist derart drehbar in der hydraulischen Antriebsvorrichtung 38 gelagert, dass die erste Verzahnung 50 und die zweite Verzahnung 54 ineinander eingreifen. Wird folglich der Kolben 42 mit einem Druck beaufschlagt, wird über die Verzahnungen 50 und 54 ein Drehmoment in die Antriebswelle 52 eingeleitet.

Die Antriebswelle 52 ist über eine Kupplung 56 mit der Welle 14 verbunden. Folglich wird das in die Antriebswelle 52 eingeleitete Drehmoment über die Kupplung 56 in Welle 14 weitergeleitet. Befindet sich in dem ersten Abschnitt I eine Hydraulikflüssigkeit, wird folglich über die erste Fläche 18 eine Druckbeaufschlagung der Hydraulikflüssigkeit erreicht, so dass diese mit einem bestimmten Überdruck an dem Fluidausgang 34 bereitgestellt ist. Dieser Überdruck wird durch die Größe der Fläche des Kolbens 42, einen Wirkdurchmesser der zweiten Verzahnung 54, einer Größe der ersten Fläche 18 sowie ihre radiale Erstreckung von der Mittelachse 16 und durch den an dem Hochdruckeingang 46 angelegten Druck bestimmt. Folglich kann bei einem vorgegebenen Druckniveau eines Hydrauliksystems über Anpassung des Kolbens 42, der Antriebswelle 52 sowie der ersten Fläche 18 ein gewünschtes Niederdruckniveau an dem Fluidausgang 34 erreicht werden.

Bei Entnahme von Fluid aus dem ersten Abschnitt I kann zudem die erste Fläche 18 dem sinkenden Fluidvolumen in dem ersten Abschnitt I folgen oder bei sich vergrößerndem Fluidvolumen in dem Abschnitt I durch einströmendes Fluid aus dem Fluideingang 36 ausweichen. Die mögliche Schwenkbewegung der ersten Fläche 18 wird durch die Länge der ersten Verzahnung 50 bestimmt.

In dem Abschnitt II kann sich insbesondere Luft befinden, die ebenfalls mit einem variablen Volumen des zweiten Abschnitts II konfrontiert wird. Zum Ausgleichen dieses variablen Volumens ist ein Ausschnitt 58 vorgesehen, der in Fluidverbindung mit dem zweiten Abschnitt II steht und exemplarisch in dem Deckel 10 angeordnet ist. Hierdurch kann Luft problemlos aus dem zweiten Abschnitt II entweichen oder darüber hineingelangen.

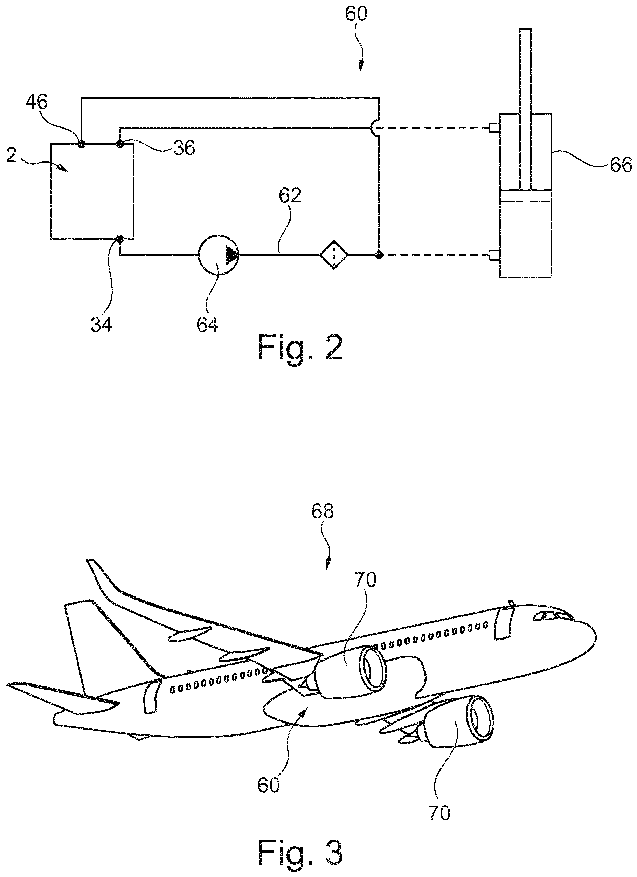

Fig. 2 zeigt exemplarisch ein schematisches Hydrauliksystem 60, das mit Hydraulikleitungen 62, einer Pumpe 64, einem Verbraucher 66 und einem Hydraulikreservoir 2 ausgestattet ist. Hier ist der Hochdruckeingang 46 beispielhaft mit einer der Leitungen 62 gekoppelt, so dass ein von der Pumpe 64 hervorgerufener Druck zu einer Erzeugung von Druck an dem Fluidausgang 34 führt.

Fig. 3 zeigt schließlich ein Flugzeug 68, das mit einem solchen Hydrauliksystem 60 ausgestattet ist. Die Pumpe 64 könnte beispielsweise in oder an einem Triebwerk 70 angeordnet sein.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Reservoir (2) für ein Hydrauliksystem, aufweisend
- ein Gehäuse (4) mit einem Innenraum (12) und einem Fluidausgang (34), und
- eine in dem Gehäuse (4) angeordnete Trennvorrichtung (32) zum Unterteilen des Innenraums (12) in zwei voneinander getrennte Abschnitte (I, II), wobei der Fluidausgang (34) mit einem ersten Abschnitt in Fluidverbindung steht, **gekennzeichnet durch** eine hydraulische Antriebsvorrichtung (38), die mit einer in dem Gehäuse (4) verlaufenden Welle (14) zum Einleiten eines Drehmoments gekoppelt ist,
wobei sich die Trennvorrichtung (32) entlang der Welle (14) in dem Gehäuse (4) erstreckt,
wobei die Trennvorrichtung (32) dazu eingerichtet ist, das Größenverhältnis der beiden getrennten Abschnitte (I, II) durch Verschwenken mindestens einer mit der Welle (14) gekoppelten ersten Fläche (18) der Trennvorrichtung (32) um eine durch die Welle (14) vorgegebene Achse (16) einzustellen, und
wobei die Trennvorrichtung (32) mit der hydraulischen Antriebsvorrichtung (38) derart gekoppelt ist, dass die mindestens eine erste Fläche (18) ein von einem Flächenmaß der ersten Fläche (18) und dem Drehmoment abhängigen Druck auf ein in dem ersten Abschnitt (I) befindliches Fluid ausübt.

2. Reservoir (2) nach Anspruch 1, wobei der Innenraum (12) zylindrisch ist.

3. Reservoir (2) nach Anspruch 1 oder 2, wobei sich die erste Fläche (18) von der Welle (14) radial nach außen zu einer Innenwandung (24) des Innenraums (12) erstreckt.

4. Reservoir (2) nach einem der vorhergehenden Ansprüche, die Trennvorrichtung (32) ferner aufweisend eine zweite Fläche (26), die starr in dem Innenraum (12) angeordnet ist und sich von einer Innenwandung (24) des Innenraums (12) radial zu der Welle (14) hin erstreckt.

5. Reservoir (2) nach einem der vorhergehenden Ansprüche, wobei die hydraulische Antriebsvorrichtung (38) einen Kolben (42) aufweist, der in einem Zylinder (40) verschiebbar gelagert ist, mechanisch mit einer Antriebswelle (52) gekoppelt ist und über einen Hochdruckeingang (46) in dem Zylinder (40) mit einem Hydraulikdruck beaufschlagbar ist.

6. Reservoir (2) nach Anspruch 5, wobei der Kolben (42) mit einer eine erste Verzahnung (50) aufweisenden Stange (48) verbunden ist, wobei die Antriebswelle (52) mit einer zweiten Verzahnung (54) ausgestattet ist und wobei die erste Verzahnung (50) in die zweite Verzahnung (54) eingreift.

7. Reservoir (2) nach einem der vorhergehenden Ansprüche, wobei das Gehäuse (4) einen Ausschnitt (58) aufweist, der in Fluidverbindung mit dem zweiten Abschnitt (II) steht.

8. Reservoir (2) nach einem der vorhergehenden Ansprüche, wobei die hydraulische Antriebsvorrichtung (38) und die erste Fläche (18) derart ausgeführt sind, dass ein Druckverhältnis zwischen einem Druck an der hydraulischen Antriebsvorrichtung (38) und dem Fluidausgang (34) in einem Bereich von 1:25 bis 1:120 eingestellt wird.

9. Hydrauliksystem (60), aufweisend mindestens ein Reservoir (2) nach Anspruch 1 bis 8.

10. Hydrauliksystem (60) nach Anspruch 9, wobei das Hydrauliksystem (60) eine Pumpe (64) aufweist, die einen Eingang und einen Ausgang aufweist, wobei der Eingang mit dem Fluidausgang des Reservoirs (2) gekoppelt ist und wobei der Ausgang mit der hydraulischen Antriebsvorrichtung (38) gekoppelt ist.

11. Fahrzeug (68) mit einem Hydrauliksystem (60) nach einem der Ansprüche 9 und 10.

12. Fahrzeug (68) nach Anspruch 11, wobei das Fahrzeug (68) ein Flugzeug (68) ist.

## Claims

1. Reservoir (2) for a hydraulic system, comprising
- a housing (4) with an interior (12) and a fluid outlet (34), and
- a separating device (32) disposed in the housing (4) for dividing the interior (12) into two separate sections (I, II), the fluid outlet (34) being in fluid communication with a first section,
**characterised by** a hydraulic drive device (38) coupled to a shaft (14) extending in the housing (4) for introducing a torque,
wherein the separating device (32) extends along the shaft (14) in the housing (4),
wherein the separating device (32) is adapted to adjust the size ratio of the two separated sections (I, II) by pivoting at least a first surface (18) of the separating device (32) coupled to the shaft (14) about an axis (16) predetermined by the shaft (14), and
wherein the separating device (32) is coupled to the hydraulic drive device (38) in such a way that the at least one first surface (18) exerts a pressure on a fluid located in the first section (I) which is dependent on a surface dimension of the first surface (18) and the torque.

2. Reservoir (2) according to claim 1, wherein the interior (12) is cylindrical.

3. Reservoir (2) according to claim 1 or 2, wherein the first surface (18) extends radially outwardly from the shaft (14) to an inner wall (24) of the interior space (12).

4. Reservoir (2) according to any of the preceding claims, the separator (32) further comprising a second surface (26) rigidly disposed in the interior (12) and extending radially outwardly from an inner wall (24) of the interior (12) towards the shaft (14).

5. Reservoir (2) according to one of the preceding claims, wherein the hydraulic drive device (38) comprises a piston (42) which is displaceably mounted in a cylinder (40), is mechanically coupled to a drive shaft (52) and can be acted upon by a hydraulic pressure via a high-pressure inlet (46) in the cylinder (40).

6. Reservoir (2) according to claim 5, wherein the piston (42) is connected to a rod (48) having a first toothing (50), wherein the drive shaft (52) is provided with a second toothing (54) and wherein the first toothing (50) engages the second toothing (54).

7. Reservoir (2) according to any of the preceding claims, wherein the housing (4) has a cutout (58) which is in fluid communication with the second portion (II).

8. Reservoir (2) according to one of the preceding claims, wherein the hydraulic drive device (38) and the first surface (18) are designed such that a pressure ratio between a pressure at the hydraulic drive device (38) and the fluid outlet (34) is set in a range from 1:25 to 1:120.

9. A hydraulic system (60) comprising at least one reservoir (2) according to claims 1 to 8.

10. A hydraulic system (60) according to claim 9, wherein the hydraulic system (60) comprises a pump (64) having an input and an output, wherein the input is coupled to the fluid output of the reservoir (2) and wherein the output is coupled to the hydraulic drive device (38).

11. A vehicle (68) having a hydraulic system (60) according to one of claims 9 and 10.

12. Vehicle (68) according to claim 11, wherein the vehicle (68) is an aircraft (68).

## Revendications

1. Une réservoir (2) pour un système hydraulique, comprenant
- un logement (4) avec un intérieur (12) et une sortie de fluide (34), et
- un dispositif de séparation (32) disposé dans le boîtier (4) pour diviser l'intérieur (12) en deux sections (I, II) séparées l'une de l'autre, la sortie de fluide (34) étant en communication de fluide avec une première section,
**caractérisé par** un dispositif d'entraînement hydraulique (38) couplé à un arbre (14) s'étendant dans le boîtier (4) pour introduire un couple,
dans lequel le dispositif de séparation (32) s'étend le long de l'arbre (14) dans le boîtier (4),
dans lequel le dispositif de séparation (32) est adapté pour ajuster le rapport de taille des deux sections séparées (I, II) en faisant pivoter au moins une première surface (18) du dispositif de séparation (32) couplée à l'arbre (14) autour d'un axe (16) prédéterminé par l'arbre (14), et
dans lequel le dispositif de séparation (32) est couplé au dispositif d'entraînement hydraulique (38) de telle manière que la au moins une première surface (18) exerce sur un fluide situé dans la première section (I) une pression qui dépend d'une dimension de surface de la première surface (18) et du couple.

2. Réservoir (2) selon la revendication 1, dans lequel l'intérieur (12) est cylindrique.

3. Réservoir (2) selon la revendication 1 ou 2, dans lequel la première surface (18) s'étend radialement vers l'extérieur depuis le puits (14) jusqu'à une paroi intérieure (24) de l'intérieur (12).

4. Réservoir (2) selon l'une des revendications précédentes, le séparateur (32) comprenant en outre une seconde surface (26) disposée de manière rigide à l'intérieur (12) et s'étendant radialement vers l'extérieur à partir d'une paroi intérieure (24) de l'intérieur (12) vers le puits (14).

5. Réservoir (2) selon l'une des revendications précédentes, dans lequel le dispositif d'entraînement hydraulique (38) comprend un piston (42) qui est monté coulissant dans un cylindre (40), est couplé mécaniquement à un arbre d'entraînement (52) et peut être soumis à une pression hydraulique par une entrée haute pression (46) dans le cylindre (40).

6. Réservoir (2) selon la revendication 5, dans lequel le piston (42) est relié à une tige (48) ayant une première denture (50), dans lequel l'arbre d'entraînement (52) est pourvu d'une deuxième denture (54) et dans lequel la première denture (50) s'engage dans la deuxième denture (54).

7. Réservoir (2) selon l'une des revendications précédentes, dans lequel le boîtier (4) comporte une découpe (58) qui est en communication fluide avec la deuxième partie (II).

8. Réservoir (2) selon l'une des revendications précédentes, dans lequel le dispositif d'entraînement hydraulique (38) et la première surface (18) sont conçus de telle sorte qu'un rapport de pression entre une pression au niveau du dispositif d'entraînement hydraulique (38) et la sortie de fluide (34) est réglé dans une plage de 1:25 à 1:120.

9. Un système hydraulique (60) comprenant au moins un réservoir (2) selon les revendications 1 à 8.

10. Système hydraulique (60) selon la revendication 9, dans lequel le système hydraulique (60) comprend une pompe (64) ayant une entrée et une sortie, dans lequel l'entrée est couplée à la sortie de fluide du réservoir (2) et dans lequel la sortie est couplée au dispositif d'entraînement hydraulique (38).

11. Véhicule (68) ayant un système hydraulique (60) selon l'une des revendications 9 et 10.

12. Véhicule (68) selon la revendication 11, dans lequel le véhicule (68) est un avion (68).
